# EUROPEAN PATENT SPECIFICATION

(11) **EP 3 318 914 B1**
(45) Date of publication and mention of the grant of the patent: **17.06.2026**
(21) Application number: 16197257.5
(22) Date of filing: 04.11.2016
(51) Int. Cl.: G02B 27/01, G02B 27/00

(54) **GAZE TRACKING**
BLICKVERFOLGUNG
POURSUITE OCULAIRE

(43) Date of publication of application: 09.05.2018
(73) Proprietor: Nokia Technologies Oy, 02610 Espoo (FI)
(72) Inventor: JÄRVENPÄÄ, Toni Johan, 37800 Akaa (FI); ESKOLIN, Jan Peter Erik, 33960 Pirkkala (FI)
(74) Representative: Swindell & Pearson Limited

(56) References cited:
- EP-A1- 3 062 142
- US-A1- 2013 300 634
- US-A1- 2016 131 912
- US-B1- 8 767 306

## Description

### TECHNOLOGICAL FIELD

Examples of the present disclosure relate to an apparatus for a near-eye display. Some examples, though without prejudice to the foregoing, relate to an apparatus for providing gaze tracking in a near-eye display.

### BACKGROUND

Gaze tracking, namely the process of determining a point of gaze of a user's eye so as to determine a line of sight associated with the user's eye or to determine where the user is looking (and thus determining what the user is looking at), typically relies on capturing video images from a user's eye(s). Such video based gaze tracking typically uses infrared (IR) LEDs or infrared lasers for illuminating the eye and detecting reflections/glints of the infrared light from the eye (e.g. its cornea/surface). A determination of a user's gaze may be calculated based on the detected infrared reflections and detected eye features such as detected pupil position.

EP3062142 discloses an apparatus for providing gaze tracking in a near-eye display. Certain examples provide an apparatus comprising: a light modulator configured to receive light of a first range of wavelengths and generate an image beam therefrom. The light modulator is further configured to receive light of a second range of wavelengths and generate a probe beam therefrom. The apparatus also comprises one or more light guides comprising: one or more in-coupling diffractive element areas, and one or more out-coupling diffractive element areas. The one or more in-coupling diffractive element areas are configured to receive and in-couple the image beam and the probe beam into the one or more light guides. The one or more out-coupling diffractive element areas are configured to out-couple, from the one or more light guides: the image beam to a user's eye for user viewing, and the probe beam to the user's eye for detection of reflection therefrom.

US8767306 discloses an optical system that has an aperture through which virtual and real-world images are viewable along a viewing axis. The optical system may be incorporated into a head-mounted display (HMD). By illuminating a viewing location with an infrared light source, an eye pupil may be illuminated. Infrared light is reflected from the viewing location and is collected with a proximal beam splitter. An image former is configured to reflect at least a portion of the visible light pattern generated by the display panel to form the virtual image and transmit at least a portion of the collected infrared light. The transmitted infrared light may be imaged by a camera. The HMD may use images from the camera to provide, for example, context-sensitive virtual images to a wearer.

US2016/0131912 discloses a head-worn display including a display panel sized and positioned to produce a field of view to present digital content to an eye of a user, and a processor adapted to present the digital content to the display panel such that the digital content is only presented in a portion of the field of view, the portion being in the middle of the field of view such that horizontally opposing edges of the field of view are blank areas. The processor is adapted to shift the digital content into one of the blank areas to adjust the convergence distance of the digital content and thereby change the perceived distance from the user to the digital content.

### SUMMARY

The invention is defined in the appended set of claims.

### BRIEF DESCRIPTION OF THE DRAWINGS

For a better understanding of various examples of the present disclosure that are useful for understanding the detailed description and certain embodiments of the invention, reference will now be made by way of example only to the accompanying drawings in which:
Figure 1 illustrates an example embodiment of an augmented reality apparatus.
Figures 2a, 2b, 2c, 3 and 4 illustrate example embodiments of display elements that may be used in an augmented reality apparatus.
Figures 5a, 5b and 5c illustrate example embodiments of infrared light beam shapes that can be used in gaze tracking.
Figures 6 and 7 illustrate an example embodiment of gaze tracking use in an augmented reality apparatus.
Figure 8 is a flow chart illustrating an example embodiment.

### DETAILED DESCRIPTION

Examples of apparatuses according to the present disclosure will now be described with reference to the figures.

A user's perception of the surrounding physical environment may be enhanced by overlaying virtual object(s) to the user's field of view and/or supplementing physical objects with virtual enhancements. This modified physical environment may be generated by an apparatus. This enhanced perception of the physical environment is known as augmented reality.

Augmented reality may be utilized in various fields. For example, gaming and navigation applications may be enhanced by augmented reality and in fields like assembly, maintenance and training augmented reality may provide visual guidance thus enhancing user experience. In the field of interior design for example, augmented reality may enable a user to virtually test how a piece of furniture would fit in a room. It is also possible to visualize building construction projects in the real physical environment by utilizing augmented reality.

Augmented reality may be perceived by using a head-worn apparatus. Such a head-worn apparatus may also be called as a Near-Eye Display apparatus, Head-Mounted Display apparatus or a Heads-Up Display apparatus. The head-worn apparatus may have a form factor such as eyeglasses, a harness or a helmet.

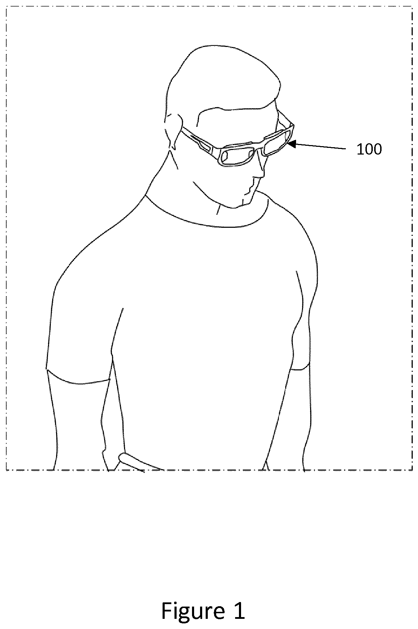

Figure 1 illustrates an example embodiment of an apparatus 100 that is capable of presenting augmented reality content. The apparatus 100 is a head-worn apparatus that comprises at least one see-through display element oriented such that one part of the at least one see-through display element corresponds with one of the viewer's eyes and another part of the at least one see-through display element corresponds with the other one of the viewer's eyes. Although the form factor of the apparatus 100 in this example embodiment is similar to a pair of eyeglasses, the apparatus 100 could also have other type of a form factor. For example, the form factor may correspond to that of a monocular near eye display that comprises a single see-through display element.

The user may look through the at least one see-through display element of the apparatus 100 as can be seen in Figure 1. This way, the user may perceive content that is displayed by the apparatus 100. For example, the at least one see-through display element may direct a light beam into at least one of the viewer's retinas such that the viewer perceives one or more images projected by the apparatus 100. Alternatively, the apparatus 100 may project light through a collimating reflector towards one of the eye of the user such that the user perceives one or more images displayed on the see-through display.

Alternatively, instead of the at least one see-through display elements, the apparatus 100 may comprise a display element. The display element is configured to project a light beam onto one or more physical surfaces around the user and within the user's field of view such that the user may perceive augmented reality content.

The apparatus 100 enables the user to perceive the one or more displayed virtual images as larger than the actual physical apparatus 100.

The apparatus 100 may comprise at least one processor circuitry and at least one memory. The at least one processor circuitry may be any type of processor and may further comprise any one or more of a controller, an embedded controller, processors core and/or the like. The processor circuitry utilizes computer program code to cause the apparatus 100 to perform one or more actions. The memory may comprise volatile memory, such as volatile Random Access Memory (RAM) including a cache area for the temporary storage of data and/or other memory, for example non-volatile memory, which may be embedded and/or the like. The non-volatile memory may comprise any one or more of EEPROM, a flash memory and the like. The memory may store any of number of pieces of information and data. The information and data may be used by the apparatus 100 to implement one or more functions of the apparatus 100 such as the functions described herein. In at least one example embodiment the memory includes computer program code such that the memory and the computer program code are configured to, working with the processor circuitry, cause the apparatus 100 to perform one or more actions described herein.

The apparatus 100 may further comprise a communication unit. The communication unit may comprise an antenna, or multiple antennae, a wired connector, and/or the like in operable communication with a transmitter and/or a receiver. In at least one example embodiment the processor circuitry may provide signals to a transmitter or may receive signals from a receiver, or both. The signals may comprise any one or more of signaling information in accordance with a communication interface standard, user speech, received data, user generated data and/or the like. The communication unit may operate with one or more air interface standards, communication protocols, modulation types and access types (e.g. one or more standards in the Institute of Electrical and Electronic Engineers (IEEE) 802 family of wired and wireless standards). By way of illustration, the communication unit may operate in accordance with second generation wireless communication protocols, with third-generation wireless communication protocols such as Universal Mobile Telecommunications System (UMTS), CDMA2000, wideband CDMA (WCDMA) and time division-synchronous CDMA (TD-CDMA) and/or with fourth-generation (4G) wireless communication protocols, wireless networking protocols, such as 802.11, short-range wireless protocols, such as Bluetooth, and/or the like. Communication device 15 may operate in accordance with wireline protocols, such as Ethernet, digital subscriber line (DSL), asynchronous transfer mode (ATM), and the like.

The processor circuitry may further comprise means, such as circuitry, for implementing audio, video, communication, navigation, logic functions, and/or the like, as well as for implementing one or more example embodiments including, for example, one or more of the functions described herein. For example, the processor circuitry may comprise means, such as a digital signal processor device, a microprocessor device, an analog to digital converter, a digital to analog converter and other circuits, for performing various functions including, for example, one or more of the functions described herein. The apparatus 100 may perform control and signal processor functions of the apparatus 100 among these devices according to their respective capabilities. The processor circuitry thus may comprise the functionality to encode and interleave message and data prior to modulation and transmission. The processor circuitry may additionally comprise an internal voice coder, and may comprise an internal data modem. Further, the processor circuitry may comprise functionality to operate one or more software programs, which may be stored in memory and which may, among other things, cause the processor circuitry to implement at least one or more of the functions described herein. For example, the processor circuitry may operate a connectivity program, such as a conventional internet browser. The connectivity program may allow the apparatus 100 to transmit and receive internet content, such as one or more of location-based content and other web page content, according to one or more of a Transmission Control Protocol (TCP), Internet Protocol (IP), User Datagram Protocol (UDP), Internet Message Access Protocol (IMAP), Post Office Protocol (POP), Simple Mail Transfer Protocol (SMTP), Wireless Application Protocol (WAP), Hypertext Transfer Protocol (HTTP), and the like, for example.

The apparatus 100 may further comprise a user interface for providing output or receiving input or both. The apparatus 100 may comprise an output device. The output device may comprise one or more of an audio output device, such as a ringer, an earphone, a speaker, and the like. The output device may comprise a tactile output device, such as a vibration transducer, an electronically deformable surface, an electronically deformable structure, and the like. The output device may comprise one or more visual output device, such as a display, a light, and/or the like. In at least one example embodiment, the apparatus causes display of information, the causation of display may comprise displaying the information on a display comprised by the apparatus, sending the information to a separate apparatus, and/or the like. For example, the apparatus may send the information to one or more a separate display, a computer, a laptop, a mobile apparatus, and the like. For example, the apparatus may be a server that causes display of the information by way of sending the information to a client apparatus that displays the information. In this manner, causation of display of the information may for example comprise sending to the separate display one or more messages that comprise the information, streaming the information to the separate apparatus, and/or the like. The apparatus 100 may comprise an input device. The input device may comprise one or more of any of a light sensor, a proximity sensor, a microphone, a touch sensor, a force sensor, a button, a keypad, a motion sensor, a magnetic field sensor, a camera, and the like. A touch sensor and a display may be characterized as a touch display. In an embodiment comprising a touch display, the touch display may be configured to receive input, for example from a single point of contact, multiple points of contact, and/or the like. In such an embodiment, the touch display or the processor, or both, may determine input based, at least in part, on any one or more position, motion, speed, contact area, and the like of the single point of contact or multiple points of contact received by the touch display. In at least one example embodiment, the apparatus receives an indication of an input. The apparatus may receive the indication from one or more of a sensor, a driver, a separate apparatus, and the like. The indication may comprise information that conveys, for example, one or more of information indicative of the input, information indicative of an aspect of the input, information indicative of an occurrence of the input, and the like.

The input device may comprise a media capturing element. The media capturing element may be any means for capturing an image, video, and/or audio for storage, display or transmission. For example, in at least one example embodiment in which the media capturing element is a camera module, the camera module may comprise a digital camera which may form a digital image file from a captured image. As such, the camera module may comprise hardware, such as a lens or other optical component(s), and software for creating a digital image file from a captured image. Alternatively, the camera module may comprise only the hardware for viewing an image, while a memory device of the apparatus 100 stores instructions for execution by the processor circuitry in the form of software for creating a digital image file from a captured image. In at least one example embodiment, the camera module may further comprise a processing element that is separate from the processor circuitry for processing data, such as image data. The camera module may provide data, such as image data, in one or more of various formats. In at least one example embodiment, the camera module comprises an encoder, a decoder, and/or the like for compressing and/or decompressing image data. The encoder and/or decoder may encode and/or decode according to a standard format, for example, a Joint Photographic Experts Group (JPEG) standard format.

Various technical solutions may exist for implementing an apparatus capable of presenting augmented reality content. In some example embodiments a pixel of the augmented reality content perceived by a user is represented by one or more light beams produced by a display element and enlarged by imaging optics thereby enabling the user to perceive the augmented reality content. Diffractive optical elements on a waveguide may be used in such systems as the imaging optics in some example embodiments. Examples of technical solutions that may be used to implement the augmented reality display capability of the apparatus 100 are now discussed.

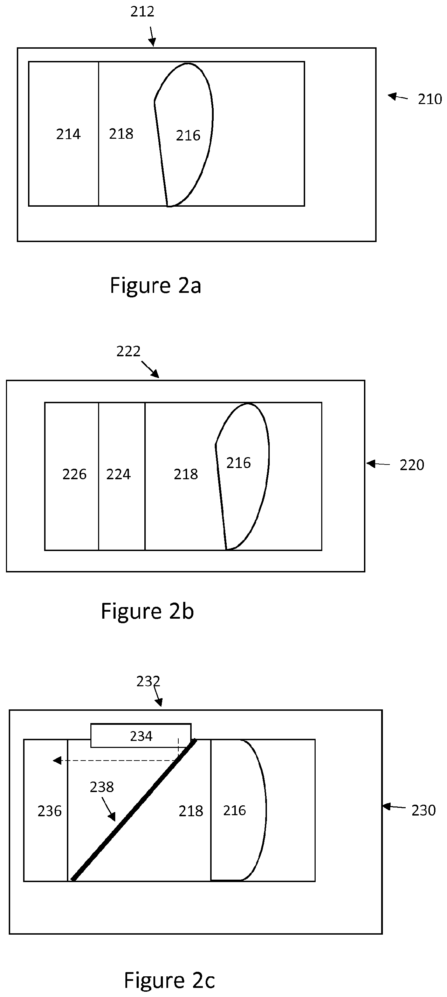

Figure 2a illustrates an example embodiment of a display element 210 implemented using an active display panel. The display element 210 comprises a housing 212, an active display panel 214, a projection lens 216, and an actuator 218. The active display panel 214 may be for example a light emitting diode, LED, array, organic LED, OLED array, or a quantum dot array. The active display panel 214 does not require external illumination by a light source, because it directly emits light.

The projection lens 216 may be for example a refractive lens or a set of lenses made of plastic or glass, a Fresnel lens, a microlens array, a diffraction grating, a liquid crystal lens, a variable liquid lens, or any other suitable lens assembly. The actuator 218 is coupled to projection lens 216 to manipulate the projection lens 216, thereby altering focus of a light beam produced by the active display panel 214. The actuator 218 may be for example a voice coil motor, VCM a piezoelectric actuator, a shaped alloy actuator or a micro-electro-mechanical-system MEM actuator. The actuator 218 operates to mechanically move projection lens 216 relative to active display panel 214. This relative movement changes offset between a focal point of projection lens 216 and an emission surface of active display panel 214, which in turn changes the focus. The focus is linked to the location or image depth of the augmented reality content and can serve as a mechanism by which location or image depth of the augmented reality content, as perceived by the user, can be adjusted. The actuator 218 and the projection lens 216 can be considered to be comprised in an optical element that guides the light beam produced by the active display panel 214.

Figure 2b illustrates a comparative example of a display element 220 implemented using a transmissive display panel. The display element 220 comprises a housing 222, a transmissive display panel 224, the projection lens 216 as described in the example embodiment of figure 2a, the actuator 218 as described in the example embodiment of figure 2a, and a light source 226. The transmissive display panel 224 may be for example a liquid crystal display. The transmissive display panel 224 requires an external back illumination which is provided by the light source 226. The light source 226 may be for example a LED, laser or a fluorescent light, or a setup including multiple LEDs and lenses. The light emitted by the light source 226 selectively passes through the display panel 224, which modulates image data onto the light by selectively blocking the light to generate a light beam. The light beam then passes through projection lens 216 and is magnified before being emitted from the housing 222 to be perceived by a user as augmented reality content. The actuator 218 and the projection lens 216 can be considered to be comprised in an optical element that guides the light beam produced by the transmissive display panel 224.

Figure 2c illustrates a display element 230 according to a comparative example that is implemented using a reflective display panel. The display element 230 includes a housing 232, a reflective display panel 236, a beam splitter 238, a projection lens 216 as described in the example embodiment of figure 2a, an actuator 218 as described in the example embodiment of figure 2a and a light source 234. The beam splitter 238 enables dividing a light beam into two or more separate beams. The reflective display panel 236 may be implemented as a liquid crystal on silicon, LCoS panel or other front illuminated display technologies. The reflective display panel 236 requires external front illumination by the light source 234 such as LED, laser or fluorescent light, or a setup including multiple LEDs and lenses. The light emitted by the light source 234 is reflected onto the surface of the reflective display panel 236 by the beam splitter 238, which in some example embodiments is a polarizing beam splitter. The reflective display panel 236 modulates image data onto light emitted by the light source 234 by selective reflection to generate a light beam. For example, in the selective reflection the reflective display panel 236 rotates polarization for active pixels and the polarizing beam splitter 238 deflects unaltered polarization, which comprises black pixels, back to the light source 234. The altered light beam passes through the beam splitter 238 and is then focused by the projection lens 216 before it is emitted from the housing 232 to be perceived by the user as augmented reality content or alternatively, in some example embodiments, to be in-coupled into a see-through display element by a diffractive in-coupling grating. The actuator 218, the beam splitter 238 and the projection lens 216 can be considered to be comprised by an optical element that guides the light beam produced by the reflective display panel 236.

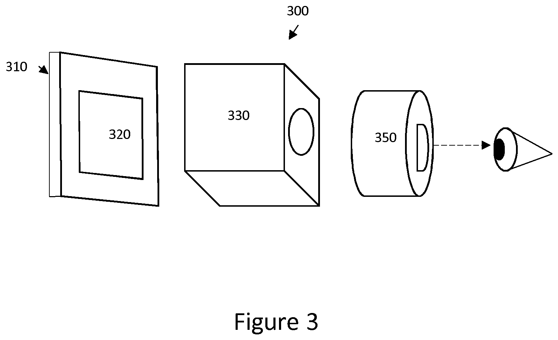

Figure 3 illustrates an example embodiment of a display element 300. Any of the display elements 210, 220 or 230 may be implementable according to this example embodiment. The display element 300 comprises a base 310, a display panel 320, a housing 330 comprising an actuator and a projection lens 350 that threads into housing 330. The display element 300 is configured to produce light beams that may be projected towards the user's eye through free space air.

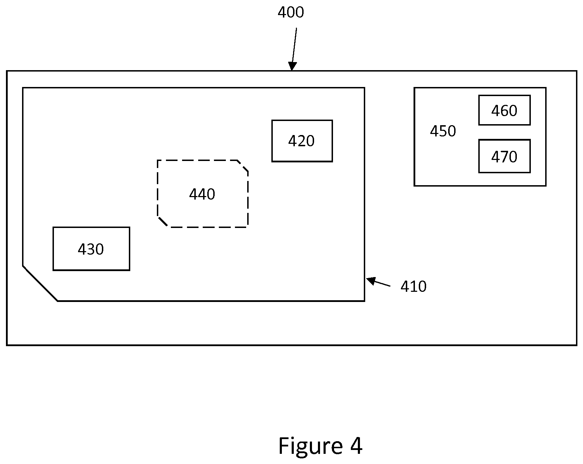

Figure 4 illustrates an example embodiment of a display element 400 that may be used for displaying augmented reality content in apparatus 100. The display element 400 is a see-through display element that comprises transparent parts, but is not necessarily entirely transparent. The see-through display element 400 comprises one or more waveguides for transmitting angular image information in form of a light beam to the user's eye thereby enabling the user to perceive augmented reality content. As the one or more waveguides are at least partially transparent, the user is able to see the ambient physical environment through the one or more waveguides in addition to the one or more images.

The light beam is in-coupled into a waveguide on one part of the waveguide and out-coupled on another part of the waveguide. The image information propagates along the inside of the waveguide as one or more light beams that are internally reflected along the waveguides. Diffractive optics such as gratings or refractive optics such as prisms may be used to in-couple image information to the waveguide thereby forming an entrance pupil. The one or more angularly related beams that are internally reflected within the waveguides may be out-coupled by matching diffractive or refractive optics as was used to input the image information thereby forming an exit pupil that may be aligned with the user's eye.

In the example embodiment illustrated in Figure 4, diffractive gratings are used to in-couple and out-couple the light beam to and from the waveguide 410. A diffractive in-coupling grating 420 is used to in-couple the light beam into the waveguide 410. A diffractive out-coupling grating 430 is used to out-couple the image information from the waveguide 210. In addition, a diffractive intermediate grating 440 may be used.

The diffractive intermediate grating 440, which is an optional element, may be used to expand the exit pupil in a second dimension, for example in a vertical or horizontal direction. In some example embodiments, the second dimension is perpendicular to the first expansion dimension of the diffractive out-coupling-grating 430.

If the intermediate diffractive grating 440 is not present, the waveguide 410 comprises a one-dimensional expander. If the diffractive intermediate grating 440 is present, the waveguide 410 comprises a two-dimensional expander.

The waveguide 410 of the example embodiment illustrated in Figure 4 may be made of an optically transparent plane-parallel substrate. The diffractive input grating 420, the diffractive output grating 430 and the diffractive intermediate grating 440 can be replicated on the plane-parallel substrate using a polymeric material of similar refractive index to the substrate or created as part of the substrate itself. The diffractive input grating 420, the diffractive output grating 430 and the diffractive intermediate grating 440 can be patterned using microlithographic, holographic, stamping or any other suitable methods. Alternatively or additionally, stacked waveguides, curved waveguides, grating pitches tailored to desired wavelengths may be used. The diffractive input grating 420, the diffractive output grating 430 and the diffractive intermediate grating 440 may comprise any suitable periodic grating structure. The diffraction characteristics, such as grating angles, period and depths, of the diffractive input grating 420, the diffractive output grating 430 and the diffractive intermediate grating 440 control the way light beam is projected by the waveguide 410.

In some example embodiments the waveguide 410 may be planar. In some other example embodiments, the waveguide 410 may be 1- or 2-dimensionally curved. In some example embodiments, the apparatus 100 may comprise two waveguides, such as the waveguide 410. In such an example embodiment, the waveguides may be arranged such that when a user is wearing the apparatus 100 one of the waveguides is proximate to one eye and the other waveguide is proximate to the other eye.

The see-through display element 400 further comprises an optical engine 450. The optical engine 450 represents a pixel of the augmented reality content as a beam of light that enter the diffractive in-coupling grating 420 at a certain angle. The optical engine 450 comprises a display panel 460 and an optical element 470. The display panel 460 is an active display panel as described in the context of figures 2a-2c.

The light beam output by the display panel 460 is refracted by the optical element 470 before being output from the optical engine 450. The optical element 470 may be designed to collimate the light beam from the display panel 460 such that the light beam emanating from a particular pixel of the display panel 460 exit the optics 470 as parallel light rays at a particular angle to the diffractive in-coupling grating 420. This way different pixels of the light source 460 are associated with light beams at different incident angels at the diffractive input grating 420. This may then produce different exit angles for light beams associated with pixels or the augmented reality content at the diffractive out-coupling grating 430.

Gaze tracking may be used when displaying augmented reality content to the user using the apparatus 100. Gaze tracking is a process in which the point of the user's gaze is located and/or the point of gaze is tracked. This information may then be used to create a better user experience.

Gaze tracking may be achieved using various methods. Some methods require attachments to the eye, while others rely on images of the eye taken without any physical contact.

One method that relies on images of the eye utilizes a light beam, such as an infrared light beam, that is directed at the eye and its reflection patterns are then detected by one or more sensors, an example of which being an infrared camera. The reflections may occur from the cornea or from the retina of the eye as the light beam is directed at the eye, and is then reflected back by it.

The sensor that detects the reflection patterns thereby provides information that may be analyzed to extract eye rotation from changes in reflections. These sensor-based gaze trackers may use the corneal reflection and the center of the pupil as features to track over time.

The light beam used for gaze tracking may have various characteristics such as pattern, shape and/or intensity. These characteristics may be utilized in order to have better accuracy of the detected gaze.

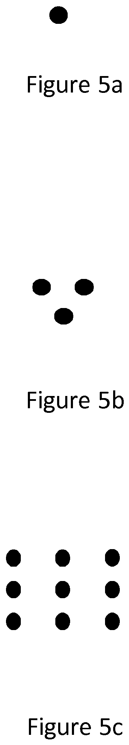

Figure 5a illustrates a comparative example in which a collimated infrared light beam is used for gaze tracking. The captured corneal reflection of the infrared light beam has the shape of a dot.

Figure 5b illustrates an example embodiment in which collimated infrared light beams are used for gaze tracking. The captured corneal reflection of the three infrared light beams has the shape of three round dots, which is a pattern. This pattern may provide for more accurate gaze tracking than the single round dot illustrated in figure 5a as the reflection of three different round dots allows more robust feature detection and may be used to determine the shape of the reflective surface such as the eye of the user. As the eye of the user has a spherical shape, the individual round dots of the reflected infrared light beams are reflected differently depending on the part of the spherical surface of the eye they are reflected from. This information can then be utilized to determine the orientation and the movement of the eye more accurately by using algorithms developed for gaze tracking.

Figure 5c illustrates an example embodiment in which even more collimated infrared light beams are used for gaze tracking. The captured corneal reflection of these infrared light beams has the shape of nine dots, which is a pattern. The reflection of this pattern may be utilized to determine the shape of the reflective surface such as the eye of the user. As the eye of the user has a spherical shape, the individual round dots of the reflected infrared light beams are reflected differently depending on the part of the spherical surface of the eye they are reflected from. This information can then be utilized to determine the movement of the eye more accurately by using algorithms developed for gaze tracking.

It is to be noted that other patterns than those introduced in figures 5b and 5c may be used. The pattern may be any cluster of dots and it may have any shape or size.

If gaze tracking that is based on using a light beam is to be used in the apparatus 100, the display element 400 is to comprise a light source configured to produce a light beam that is usable in gaze tracking. Further, the apparatus 100 is to comprise a camera configured to capture the reflected light beam.

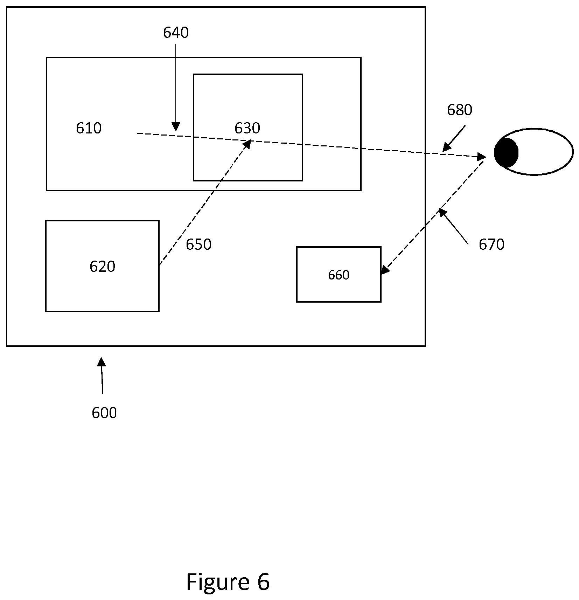

Figure 6 illustrates an example embodiment of a projection arrangement 600 that may be used in the apparatus 100. In this example embodiment, the projection arrangement 600 comprises a display element 610 that comprises an active display panel and an optical element 630 that are configured to produce a light beam 640. The display element 610 may be such as the display element illustrated in any of figures 2a, 2b, 2c or 3. The projection arrangement 600 further comprises an infrared light source 620 configured to produce an infrared light beam 650 for gaze-tracking. The shape of the infrared light beams after corneal reflections may be such as illustrated in figures 5b-5c.

Other shapes and/or sizes of the infrared light beams after corneal reflections are also possible.

In the example embodiment of figure 6, the infrared light source 620 is configured to provide the infrared light beam 650 such that the infrared light beam 650 is guided towards the eye of the user using the optical element 630 of the display element 610. The optical element 630 comprises a projection lens, an actuator and in some example embodiments a beam splitter. The optical element enables manipulation of the light beam 640 such that it may be perceived as augmented reality content by a user. In this dual display mode the light beam 640 and the infrared light beam 650 superpose and form a combined light beam 680.

The projection arrangement 600 further comprises a camera 660 configured to capture the infrared light beam 650 after it has been reflected 670 by the eye of the user. The processing circuitry of the apparatus 100 may then, using algorithms developed for gaze tracking, determine, based on the captured reflected infrared light beam 670, the direction of the user's gaze.

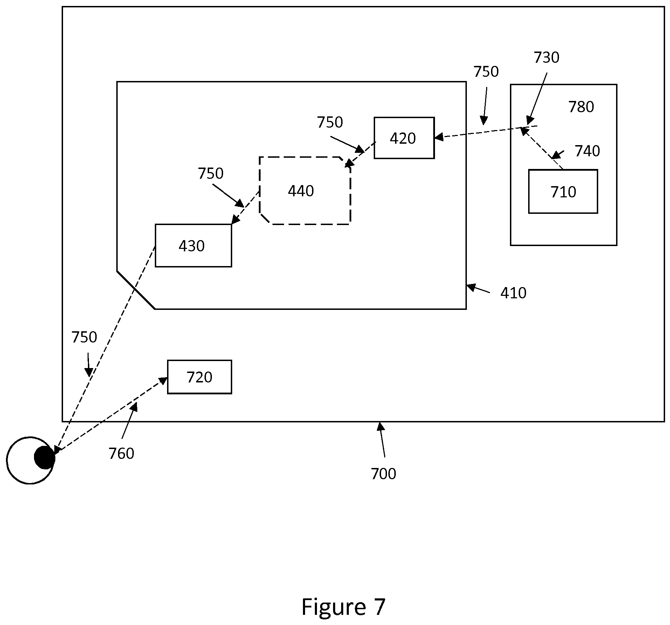

Figure 7 illustrates an example embodiment of projection arrangement 700 that may be used in the apparatus 100. The projection arrangement 700 comprises a display element that is a see-through display element. The see-through display element comprises a waveguide such as the waveguide 410 described in figure 4. The waveguide 410 comprises the diffractive in-coupling grating 420, the diffractive out-coupling grating 430 and the optional diffractive intermediate grating 440 as described in figure 4.

The projection arrangement 700 further comprises an optical engine 780. The optical engine 780 may be an optical engine such as the optical engine 450 of figure 4. In this example embodiment, the optical engine 780 further comprises an infrared light-source 710 that is configured to produce an infrared light beam 740 for gaze-tracking. The shape of the reflected infrared light beam may be such as illustrated in figures 5b-5c.

Other shapes and/or sizes of the infrared light beam 740 are also possible.

The infrared light beam 740 from the infra-red light source 710 is directed through the optical element of the optical engine 450. The optical element directs both the light beam 730 produced by the optical engine 450 and the infrared light beam 740 produced by the infrared light source 710 such that they superpose and form a combined light beam 750 that is then in-coupled to the waveguide 410 by the diffractive in-coupling grating 420. The diffractive out-coupling grating 430 then out-couples the combined light beam 750 towards the eye of the user.

The projection arrangement 700 further comprises a camera 720 configured to capture the infrared light beam after it has been reflected 760 by the eye of the user. The processing circuitry of the apparatus 100 may then determine, based on the captured reflected infrared light beams 760, the direction of the user's gaze using algorithms developed for gaze tracking.

Although only one projection arrangement 700 is illustrated in figure 7, it is to be noted that in some example embodiments there can be two projection arrangements, such as the projection arrangement 700, comprised in the apparatus 100. In such examples, one projection arrangement may be used with each of the user's eyes.

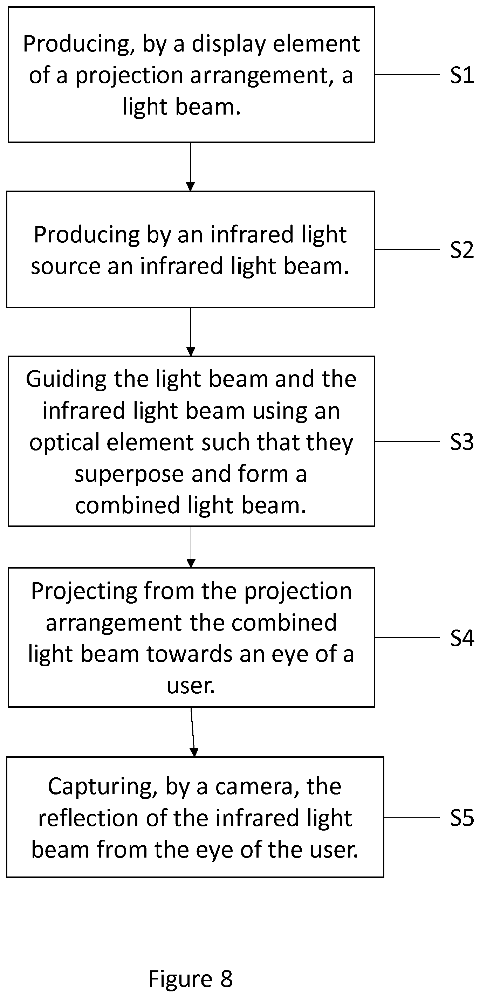

Figure 8 is a flow chart that illustrates a method according to an example embodiment. S1 is a step of producing, by a display element of a projection arrangement, a light beam. S2 is a step of producing by an infrared light source an infrared light beam. S3 is a step of guiding the light beam and the infrared light beam using an optical element such that they superpose and form a combined light beam. S4 is a step of projecting form the projection arrangement the combined light beam towards an eye of a user. S5 is a step of capturing, by a camera, the reflection of the infrared light beam from the eye of the user.

It is also noted herein that while the foregoing describes example embodiments of the invention, these descriptions should not be viewed in a limiting sense. Rather, there are several variations and modifications which may be made without departing from the scope of the present invention as defined in the appended claims

## Claims

1. An apparatus (100) comprising;
a projection arrangement (600) comprising:
a display element (610), and
an infrared light-source (620),
wherein the display element (610) comprises an active display panel which directly emits light and is configured to produce a light beam (640) and the infrared light-source (620) is configured to produce a patterned infrared light beam (650),
wherein the patterned infrared light beam is patterned independently of the light beam, and a pattern of the patterned infrared light beam is configured for gaze tracking;
the display element (610) further comprises an optical element (630) configured to guide the light beam (640) and the patterned infrared light beam (650) such that they superpose and form a combined light beam (680) that is in-coupled to a waveguide and then out-coupled from the waveguide such that it is projected towards an eye of a user, wherein the optical element comprises a projection lens (216) and an actuator (218) configured to mechanically move the projection lens relative to the display element (610), further wherein the projection lens (216) is configured to alter a focus of the light beam (640) and magnify the light beam (640); and
a camera (660) configured to capture a reflection of the patterned infrared light beam from the eye of the user.

2. An apparatus according to claim 1, wherein the display element is a see-through display element (400).

3. An apparatus according to claim 2, wherein the see-through display element comprises an optical engine (450) configured to produce the light beam.

4. An apparatus according to claim 3, wherein the optical engine comprises the optical element configured to guide the light beam and the patterned infrared light beam such that they superpose and form the combined light beam.

5. An apparatus according to any of claims 2-4, wherein the see-through display element comprises a diffractive in-coupling grating (420) and a diffractive out-coupling grating (430).

6. An apparatus according to claim 1, wherein the display element comprises a display panel (460) that is a transmissive display panel (224) and a light source (226) configured to produce the light beam.

7. An apparatus according to claim 1, wherein the display element comprises a display panel (460) that is a reflective display panel (236) and a light source (234) configured to produce the light beam.

8. An apparatus according to claim 7, wherein the optical element further comprises: a beam splitter (238); or a polarizing beam splitter.

9. An apparatus according to any previous claim, wherein the pattern comprises:
a plurality of shapes; or
a cluster of dots.

10. An apparatus according to any previous claim, wherein the apparatus is a near-eye display apparatus configured to produce augmented reality content.

11. A method comprising:
producing, by a display element (610) of a projection arrangement (600), a light beam (640), wherein the display element (610) comprises an active display panel which directly emits light;
producing, by an infrared light source (620), a patterned infrared light beam (650), wherein the patterned infrared light beam is patterned independently of the light beam, and a pattern of the patterned infrared light beam is configured for gaze tracking;
guiding the light beam and the patterned infrared light beam using an optical element (630) such that they superpose and form a combined light beam (680) that is in-coupled to a waveguide and then out-coupled from the waveguide as an out-coupled combined light beam wherein the optical element comprises a projection lens (216) and an actuator (218) configured to mechanically move the projection lens relative to the display element (610);
altering, by the projection lens (216), a focus of the light beam (640);
magnifying, by the projection lens (216), the light beam (640);
projecting from the projection arrangement the out-coupled combined light beam towards an eye of a user, and
capturing by a camera (660) the reflection of the patterned infrared light beam from the eye of the user.

12. A method according to claim 11, wherein the display element is a see-through display element (400).

13. A method according to claim 12, wherein the see-through display element comprises an optical engine (450) configured to produce the light beam.

14. Computer program instructions for causing an apparatus (100) of any one or more of claims 1 to 10 to perform a method according to claim 11.

## Patentansprüche

1. Vorrichtung (100), umfassend:
eine Projektionsanordnung (600), umfassend:
ein Anzeigeelement (610) und
eine Infrarotlichtquelle (620),
wobei das Anzeigeelement (610) ein aktives Anzeigepaneel umfasst, das direkt Licht emittiert und dazu konfiguriert ist, einen Lichtstrahl (640) zu erzeugen, und die Infrarotlichtquelle (620) dazu konfiguriert ist, einen gemusterten Infrarotlichtstrahl (650) zu erzeugen,
wobei der gemusterte Infrarotlichtstrahl unabhängig von dem Lichtstrahl gemustert ist und ein Muster des gemusterten Infrarotlichtstrahls für die Blickverfolgung konfiguriert ist;
das Anzeigeelement (610) ferner ein optisches Element (630) umfasst, das dazu konfiguriert ist, den Lichtstrahl (640) und den gemusterten Infrarotlichtstrahl (650) so zu führen, dass sie sich überlagern und einen kombinierten Lichtstrahl (680) bilden, der in einen Wellenleiter eingekoppelt und dann aus dem Wellenleiter ausgekoppelt wird, so dass er in Richtung eines Auges eines Benutzers projiziert wird, wobei das optische Element eine Projektionslinse (216) und einen Aktuator (218) umfasst, der dazu konfiguriert ist, die Projektionslinse relativ zu dem Anzeigeelement (610) mechanisch zu bewegen, ferner wobei die Projektionslinse (216) dazu konfiguriert ist, eine Fokussierung des Lichtstrahls (640) zu verändern und den Lichtstrahl (640) zu vergrößern;
und
eine Kamera (660), die dazu konfiguriert ist, eine Reflexion des gemusterten Infrarotlichtstrahls von dem Auge des Benutzers aufzunehmen.

2. Vorrichtung nach Anspruch 1, wobei das Anzeigeelement ein durchsichtiges Anzeigeelement (400) ist.

3. Vorrichtung nach Anspruch 2, wobei das durchsichtige Anzeigeelement eine optische Einheit (450) umfasst, die dazu konfiguriert ist, den Lichtstrahl zu erzeugen.

4. Vorrichtung nach Anspruch 3, wobei die optische Einheit das optische Element umfasst, das dazu konfiguriert ist, den Lichtstrahl und den gemusterten Infrarotlichtstrahl so zu führen, dass sie sich überlagern und den kombinierten Lichtstrahl bilden.

5. Vorrichtung nach einem der Ansprüche 2 bis 4, wobei das durchsichtige Anzeigeelement ein diffraktives Einkopplungsgitter (420) und ein diffraktives Auskopplungsgitter (430) umfasst.

6. Vorrichtung nach Anspruch 1, wobei das Anzeigeelement ein Anzeigepaneel (460) umfasst, das ein transmissives Anzeigepaneel (224) ist, und eine Lichtquelle (226), die dazu konfiguriert ist, den Lichtstrahl zu erzeugen.

7. Vorrichtung nach Anspruch 1, wobei das Anzeigeelement ein Anzeigepaneel (460) umfasst, das ein reflektives Anzeigepaneel (236) ist, und eine Lichtquelle (234), die dazu konfiguriert ist, den Lichtstrahl zu erzeugen.

8. Vorrichtung nach Anspruch 7, wobei das optische Element ferner umfasst: einen Strahlteiler (238); oder einen polarisierenden Strahlteiler.

9. Vorrichtung nach einem der vorhergehenden Ansprüche, wobei das Muster umfasst:
eine Vielzahl von Formen; oder
eine Ansammlung von Punkten.

10. Vorrichtung nach einem der vorhergehenden Ansprüche, wobei die Vorrichtung eine Nahaugen-Anzeigevorrichtung ist, die dazu konfiguriert ist, einen Inhalt erweiterter Realität zu erzeugen.

11. Verfahren, umfassend:
Erzeugen, durch ein Anzeigeelement (610) einer Projektionsanordnung (600), eines Lichtstrahls (640), wobei das Anzeigeelement (610) ein aktives Anzeigepaneel umfasst, das direkt Licht emittiert;
Erzeugen, durch eine Infrarotlichtquelle (620), eines gemusterten Infrarotlichtstrahls (650), wobei der gemusterte Infrarotlichtstrahl unabhängig von dem Lichtstrahl gemustert ist und ein Muster des gemusterten Infrarotlichtstrahls für die Blickverfolgung konfiguriert ist;
Führen des Lichtstrahls und des gemusterten Infrarotlichtstrahls mittels eines optischen Elements (630), so dass sie sich überlagern und einen kombinierten Lichtstrahl (680) bilden, der in einen Wellenleiter eingekoppelt und dann aus dem Wellenleiter als ausgekoppelter kombinierter Lichtstrahl ausgekoppelt wird, wobei das optische Element eine Projektionslinse (216) und einen Aktuator (218) umfasst, der dazu konfiguriert ist, die Projektionslinse relativ zu dem Anzeigeelement (610) mechanisch zu bewegen;
Verändern, durch die Projektionslinse (216), einer Fokussierung des Lichtstrahls (640);
Vergrößern, durch die Projektionslinse (216), des Lichtstrahls (640);
Projizieren, von der Projektionsanordnung, des ausgekoppelten kombinierten Lichtstrahls in Richtung eines Auges eines Benutzers, und
Aufnehmen, durch eine Kamera (660), der Reflexion des gemusterten Infrarotlichtstrahls von dem Auge des Benutzers.

12. Verfahren nach Anspruch 11, wobei das Anzeigeelement ein durchsichtiges Anzeigeelement (400) ist.

13. Verfahren nach Anspruch 12, wobei das durchsichtige Anzeigeelement eine optische Einheit (450) umfasst, die dazu konfiguriert ist, den Lichtstrahl zu erzeugen.

14. Computerprogrammanweisungen zum Veranlassen einer Vorrichtung (100) nach einem der Ansprüche 1 bis 10, ein Verfahren nach Anspruch 11 auszuführen.

## Revendications

1. Appareil (100) comprenant :
un agencement de projection (600) comprenant :
un élément d'affichage (610), et
une source de lumière infrarouge (620),
dans lequel l'élément d'affichage (610) comprend un panneau d'affichage actif qui émet directement de la lumière et est configuré pour produire un faisceau lumineux (640) et la source de lumière infrarouge (620) est configurée pour produire un faisceau de lumière infrarouge à motif (650),
dans lequel le faisceau de lumière infrarouge à motif est mis en forme indépendamment du faisceau lumineux, et un motif du faisceau de lumière infrarouge à motif est configuré pour le suivi du regard ;
l'élément d'affichage (610) comprend en outre un élément optique (630) configuré pour guider le faisceau lumineux (640) et le faisceau de lumière infrarouge à motif (650) de sorte qu'ils se superposent et forment un faisceau lumineux combiné (680) qui est couplé dans un guide d'ondes et ensuite découplé du guide d'ondes de sorte qu'il est projeté vers un œil d'un utilisateur, dans lequel l'élément optique comprend une lentille de projection (216) et un actionneur (218) configuré pour déplacer mécaniquement la lentille de projection par rapport à l'élément d'affichage (610), en outre dans lequel la lentille de projection (216) est configurée pour modifier une focalisation du faisceau lumineux (640) et grossir le faisceau lumineux (640) ;
et
une caméra (660) configurée pour capturer une réflexion du faisceau de lumière infrarouge à motif provenant de l'œil de l'utilisateur.

2. Appareil selon la revendication 1, dans lequel l'élément d'affichage est un élément d'affichage transparent (400).

3. Appareil selon la revendication 2, dans lequel l'élément d'affichage transparent comprend un moteur optique (450) configuré pour produire le faisceau lumineux.

4. Appareil selon la revendication 3, dans lequel le moteur optique comprend l'élément optique configuré pour guider le faisceau lumineux et le faisceau de lumière infrarouge à motif de sorte qu'ils se superposent et forment le faisceau lumineux combiné.

5. Appareil selon l'une quelconque des revendications 2 à 4, dans lequel l'élément d'affichage transparent comprend un réseau de diffraction de couplage d'entrée (420) et un réseau de diffraction de couplage de sortie (430).

6. Appareil selon la revendication 1, dans lequel l'élément d'affichage comprend un panneau d'affichage (460) qui est un panneau d'affichage transmissif (224) et une source de lumière (226) configurée pour produire le faisceau lumineux.

7. Appareil selon la revendication 1, dans lequel l'élément d'affichage comprend un panneau d'affichage (460) qui est un panneau d'affichage réflectif (236) et une source de lumière (234) configurée pour produire le faisceau lumineux.

8. Appareil selon la revendication 7, dans lequel l'élément optique comprend en outre : un séparateur de faisceau (238) ; ou un séparateur de faisceau polarisant.

9. Appareil selon l'une quelconque des revendications précédentes, dans lequel le motif comprend :
une pluralité de formes ; ou
un groupe de points.

10. Appareil selon l'une quelconque des revendications précédentes, dans lequel l'appareil est un appareil d'affichage proche de l'œil configuré pour produire un contenu de réalité augmentée.

11. Procédé comprenant :
la production, par un élément d'affichage (610) d'un agencement de projection (600), d'un faisceau lumineux (640), dans lequel l'élément d'affichage (610) comprend un panneau d'affichage actif qui émet directement de la lumière ;
la production, par une source de lumière infrarouge (620), d'un faisceau de lumière infrarouge à motif (650), dans lequel le faisceau de lumière infrarouge à motif est mis en forme indépendamment du faisceau lumineux, et un motif du faisceau de lumière infrarouge à motif est configuré pour le suivi du regard ;
le guidage du faisceau lumineux et du faisceau de lumière infrarouge à motif au moyen d'un élément optique (630) de sorte qu'ils se superposent et forment un faisceau lumineux combiné (680) qui est couplé dans un guide d'ondes et ensuite découplé du guide d'ondes en tant que faisceau lumineux combiné découplé, dans lequel l'élément optique comprend une lentille de projection (216) et un actionneur (218) configuré pour déplacer mécaniquement la lentille de projection par rapport à l'élément d'affichage (610) ;
la modification, par la lentille de projection (216), d'une focalisation du faisceau lumineux (640) ;
le grossissement, par la lentille de projection (216), du faisceau lumineux (640) ;
la projection, depuis l'agencement de projection, du faisceau lumineux combiné découplé vers un œil d'un utilisateur, et
la capture, par une caméra (660), de la réflexion du faisceau de lumière infrarouge à motif provenant de l'œil de l'utilisateur.

12. Procédé selon la revendication 11, dans lequel l'élément d'affichage est un élément d'affichage transparent (400).

13. Procédé selon la revendication 12, dans lequel l'élément d'affichage transparent comprend un moteur optique (450) configuré pour produire le faisceau lumineux.

14. Instructions de programme informatique pour amener un appareil (100) selon l'une quelconque des revendications 1 à 10 à exécuter un procédé selon la revendication 11.
